# EUROPÄISCHE PATENTSCHRIFT

(11) **EP 1 698 798 B1**
(45) Veröffentlichungstag und Bekanntmachung des Hinweises auf die Patenterteilung: **29.10.2008**
(21) Anmeldenummer: 06002436.1
(22) Anmeldetag: 07.02.2006
(51) Int. Cl.: F16F 15/134

(54) **Torsionsschwingungsdämpfer**
Torsional vibration damper
Amortisseur de vibrations torsionelles

(30) Priorität: 04.03.2005 DE 102005010562
(43) Veröffentlichungstag der Anmeldung: 06.09.2006
(73) Patentinhaber: LuK Lamellen und Kupplungsbau Beteiligungs KG, 77815 Bühl (DE)
(72) Erfinder: Schwederle, Philippe, 67000 Strasbourg (DE); Jäckel, Johann, 77830 Bühlertal (DE)

(56) Entgegenhaltungen:
- DE-A1- 3 721 711
- DE-A1- 3 721 712
- DE-A1- 4 117 579
- DE-A1- 4 119 187
- DE-A1- 4 206 921

## Beschreibung

Die Erfindung betrifft Torsionsschwingungsdämpfer mit einem Eingangsteil und einem Ausgangsteil, zwischen denen mindestens zwei in Reihe geschaltete Federgruppen angeordnet sind.

Derartige Torsionsschwingungsdämpfer sind beispielsweise durch die DE 42 069 21 A1 bekannt geworden. Die radial weiter innen liegende Federgruppe ist dabei mit der radial weiter außen liegenden Federgruppe über einen Zwischenflansch in Reihe geschaltet, wodurch ein verhältnismäßig großer Platzbedarf für die Anordnung der Federgruppen notwendig ist.

Der vorliegenden Erfindung lag die Aufgabe zugrunde, Torsionsschwingungsdämpfer der eingangs genannten Art bezüglich ihrer Dämpfungskapazität zu verbessern, insbesondere soll ein Aufbau eines Torsionsschwingungsdämpfers geschaffen werden, der die Unterbringung eines großen Volumens an Energiespeichern, wie insbesondere Schraubenfedern, ermöglicht und große Verdrehwinkel zwischen Eingangsteil und Ausgangsteil gewährleistet. Ein entsprechend der Erfindung ausgestalteter Torsionsschwingungsdämpfer soll also ein großes Arbeitsvermögen besitzen, wobei jedoch eine einfache und kostengünstige Montage und Herstellung gewährleistet werden soll.

Gemäß der Erfindung wird dies dadurch erzielt, dass die Federn der wenigstens zwei in Reihe geschalteten Federgruppen - in Umfangsrichtung des Torsionsschwingungsdämpfers betrachtet - alternierend, also abwechselnd angeordnet werden, wobei die einander zugewandten Enden zweier aufeinander folgender Federn der zumindest zwei Gruppen sich wenigstens teilweise radial überdecken, wodurch eine gegenseitige umfangsmäßige Abstützung zwischen den in Umfangsrichtung aufeinander folgenden Federn der Federgruppen gewährleistet wird. Durch eine derartige Anordnung werden also jeweils eine Feder der auf einem größeren Durchmesser angeordneten Federgruppe mit einer Feder der auf einem kleineren Durchmesser angeordneten Federgruppe zwischen Eingangs- und Ausgangsteil in Reihe geschaltet. Es können somit entsprechend der vorhandenen Anzahl von radial zueinander versetzten Federgruppen einzelne Federn dieser Federgruppen in Reihe geschaltet werden, das bedeutet, dass bei Vorhandensein von fünf Federgruppen Federsätze gebildet werden können, die jeweils fünf in Reihe geschaltete Federn besitzen. Bei Vorhandensein von fünf Federgruppen, die jeweils drei in Umfangsrichtung verteilte Federn besitzen, werden also drei Sätze ä fünf in Reihe geschaltete Federn gebildet. Aufgrund der umfangsmäßigen Anordnung der fünf Federn und des zwischen diesen vorhandenen radialen Versatzes, bilden diese fünf Federn eine spiralartige Federanordnung, die aufgrund des vorerwähnten radialen Versatzes eine kaskadenartige Gestalt, beziehungsweise einen stufenförmigen Verlauf aufweist.

Die erfindungsgemäße Anordnung von Federn ermöglicht die Unterbringung eines großen Federvolumens, da die einzelnen Federn sowohl in Umfangsrichtung als auch in radialer Richtung sehr eng aneinander angeordnet werden können. Auch entstehen durch die Reihenschaltung einzelner Federn der Federgruppen lange Energiespeicher, die einen großen Federweg gewährleisten und somit große Verdrehwinkel zwischen Eingangsteil und Ausgangsteil des Torsionsschwingungsdämpfers ermöglichen. Auch können durch die erfindungsgemäße Ausgestaltung eines Torsionsschwingungsdämpfers geringe Federraten realisiert werden, wodurch eine gute Schwingungsfiltrierung im Antriebsstrang realisiert werden kann.

Zweckmäßig kann es sein, wenn die in Umfangsrichtung in Reihe geschalteten Federn, der einzelnen Federgruppen zumindest annähernd um den halben Windungsdurchmesser der Federn zueinander radial versetzt angeordnet sind.

Für den Aufbau und die Funktion des Torsionsschwingungsdämpfers kann es besonders vorteilhaft sein, wenn zwischen zwei in Reihe geschalteten Federgruppen ein ringförmiges Bauteil vorgesehen ist. Ein solches Bauteil kann abwechselnd radial nach außen und radial nach innen hin offene Aufnahmen bilden für die in Reihe geschalteten Federn. Zwischen jeweils einer radial nach außen und einer radial nach innen hin offenen Aufnahme können radial verlaufende Abstützbereiche zur umfangsmäßigen Abstützung der in Reihe geschalteten Federn gebildet sein. Derartige ringförmige Bauteile können in besonders vorteilhafter Weise als Blechformteil hergestellt werden. Ein derart ausgebildetes ringförmiges Bauteil ermöglicht auch die fliehkraftmäßige Abstützung der in den radial nach innen hin offenen Aufnahmen enthaltenen Federn. Weiterhin ermöglicht ein derartiges ringförmiges Bauteil eine radiale Führung, beziehungsweise Abstützung zwischen der auf einem größeren Durchmesser vorgesehenen und der auf einem kleineren Durchmesser vorgesehenen Federgruppe. Bei Vorhandensein von mehr als zwei solcher Federgruppen, zum Beispiel drei, können die dann vorhandenen, radial übereinander und axial ineinander geschachtelten, ringförmigen Bauteile, entweder mittelbar oder unmittelbar zueinander zentriert geführt sein. Dies kann beispielsweise dadurch erfolgen, dass die die radial nach außen hin offenen Aufnahmen radial nach innen hin begrenzenden Bereiche des entsprechenden ringförmigen Bauteils mit entsprechenden Bereichen des radial innerhalb desselben liegenden ringförmigen Bauteils zusammenwirkt. Diese Bereiche des radial inneren ringförmigen Bauteils können durch die segmentförmigen Bereiche, welche die radial nach innen hin offenen Aufnahmen radial nach außen hin begrenzen, gebildet sein.

Weitere vorteilhafte, konstruktive Ausgestaltungsmerkmale sowie Wirkungsweisen sind in Zusammenhang mit der nun folgenden Figurenbeschreibung näher erläutert.

Dabei zeigen:
- Figur 1: einen Schnitt durch einen erfindungsgemäß ausgestalteten Torsionsschwingungsdämpfer,
- Figur 2: einen teilweise dargestellten Schnitt gemäß der Linie II-II der Figur 1,
- Figur 3: eine Vergrößerung des oberen Bereiches der Figur 1,
- Figur 4: eine der Figur 2 entsprechende schematische Darstellung, in der die Federn im komprimierten Zustand symbolisch durch schraffierte bogenförmige Sektoren dargestellt sind und
- Figur 5: eine zusätzliche Einzelheit einer erfindungsgemäßen Ausgestaltung.

Der in den Figuren dargestellte Torsionsschwingungsdämpfer 1 bildet hier ein so genanntes Zweimassenschwungrad, welches eine hier durch Blechteile gebildete Primärmasse 2 und eine gegenüber dieser verdrehbar gelagerte Sekundärmasse 3 besitzt. Die Sekundärmasse 3 ist hier hauptsächlich durch ein Gussbauteil gebildet, welches zur Aufnahme einer Reibungskupplung geeignet ist und eine Reibfläche 4 für die Kupplungsscheibe besitzt. Bezüglich der prinzipiellen Wirkungsweise von derartigen Torsionsschwingungsdämpfern wird auf die DE 41 17 579 A1 die DE 37 21 712 A1 die DE 37 21 711 sowie auf den in diesen angegebenen Stand der Technik verwiesen.

Zwischen dem durch die Primärmasse 2 gebildeten Eingangsteil und dem durch die Sekundärmasse 3 gebildeten Ausgangsteil des Torsionsschwingungsdämpfers 1 ist ein Drehschwingungsdämpfer 5 vorgesehen, der eine Federanordnung 6 umfasst. Wie aus den Figuren ersichtlich ist, besitzt die Federanordnung 6 Energiespeicher, die hier durch Schraubenfedern gebildet sind. Zumindest einige der Energiespeicher könnten jedoch auch anders ausgebildet sein. So könnten beispielsweise sektorförmige Gummiblöcke, Tellerfederpakete oder durch in Umfangsrichtung aufeinander folgende Schlaufen gebildete Federn zum Einsatz kommen.

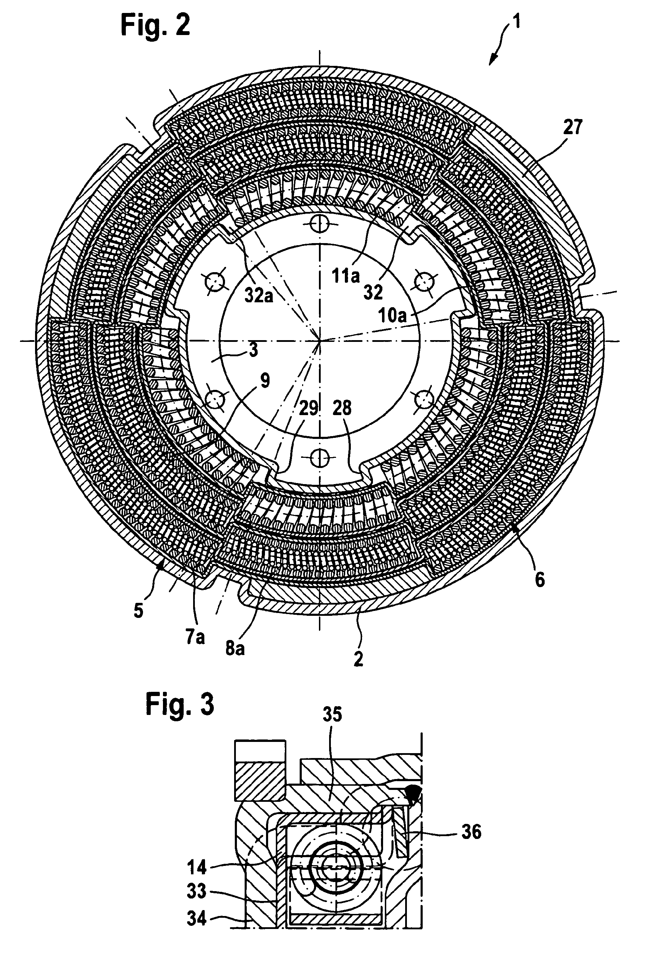

Bei dem dargestellten Ausführungsbeispiel sind 5 Federgruppen 7, 8, 9,10 und 11 vorgesehen, wobei bei dem dargestellten Ausführungsbeispiel jede Federgruppe drei über den Umfang gleichmäßig verteilte Energiespeicher 7a, 8a, 9a, 10a und 11a aufweist. Diese Energiespeicher sind hier durch mindestens eine in Umfangsrichtung bogenförmig verlaufende Schraubenfeder gebildet. Wie aus Figur 2 ersichtlich ist, können jedoch auch zumindest einige der Energiespeicher durch zumindest zwei ineinander geschachtelte Schraubenfedern gebildet sein. Dies ist beispielsweise der Fall für die Energiespeicher 7a, 8a.

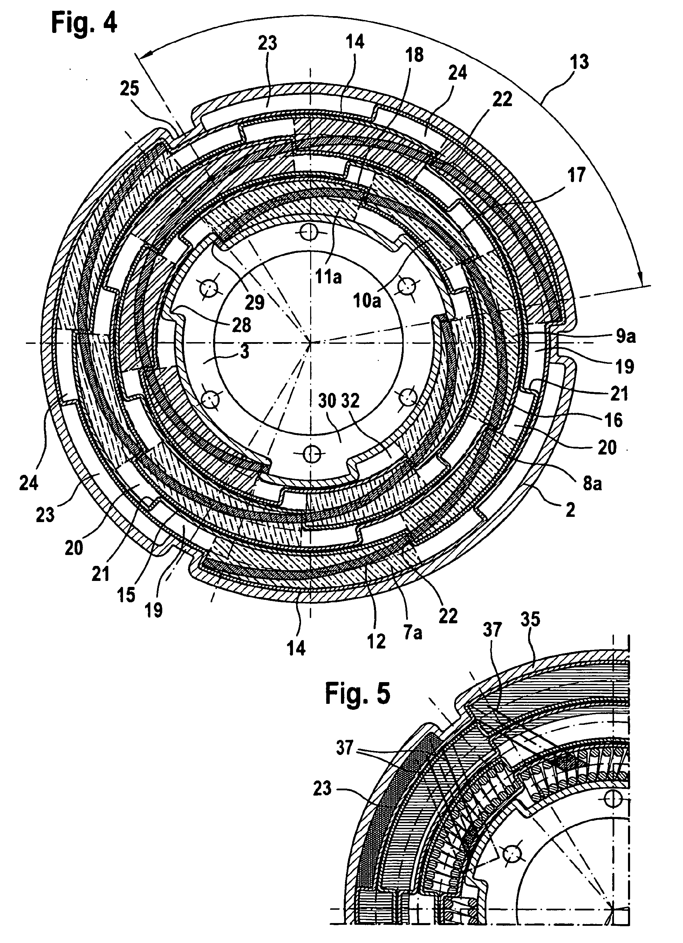

Wie insbesondere aus den Figuren 2 und 4 ersichtlich ist, sind die einzelnen Energiespeicher der Federgruppen 7, 8, 9, 10, 11 derart angeordnet, dass, betrachtet von der äußeren Federgruppe 7 zur radial inneren Federgruppe 11 hin, die radial aufeinander folgenden Energiespeicher 7a, 8a, 9a, 10a und 11a in Umfangsrichtung abwechselnd, also alternierend, angeordnet sind. Der radiale Versatz zwischen den von radial außen nach radial innen hin angeordneten Energiespeichern 7a bis 11a ist dabei derart bemessen, dass dieser Versatz zumindest annähernd dem halben Windungsdurchmesser der entsprechenden Energiespeicher entspricht.

Aufgrund der vorerwähnten Anordnung beziehungsweise Verteilung der Federgruppen 7 bis 11 und der diese bildenden Energiespeicher 7a bis 11 a entstehen drei Reihenschaltungen von jeweils fünf Energiespeichern 7a bis 11a. Diese Reihenschaltungen sind insbesondere aus Figur 4 ersichtlich und durch die drei spiralartigen Linien 12 kenntlich gemacht. In Figur 4 ist die Primärmasse 2 gegenüber der Sekundärmasse 3 um den Winkel 13 verdreht dargestellt. Die symbolisch dargestellten Energiespeicher 7a bis 11a befinden sich also in einem verspannten Zustand. Es ist ersichtlich, dass radial von außen nach radial innen hin betrachtet, die jeweils einen Federsatz bildenden Energiespeicher 7a bis 11a kaskadenartig in Reihe, also hintereinander geschaltet sind, wodurch ein großer Relativverdrehwinkel zwischen Eingangsteil 2 und Ausgangsteil 3 ermöglicht ist. Die erfindungsgemäße Anordnung der Federgruppen 7 bis 11 ermöglicht die Unterbringung eines großen Federvolumens, wodurch der Torsionsschwingungsdämpfer ein großes Arbeitspotenzial aufweist.

Zur gegenseitigen Führung, Abstützung und Beaufschlagung der Energiespeicher 7a bis 11a der Federgruppen 7 bis 11 sind ringförmige Bauteile 14, 15, 16, 17 und 18 vorgesehen, die im Folgenden als Führungsringe bezeichnet werden.

Wie aus den Figuren 2 und 4 ersichtlich ist, bilden die Führungsringe 15, 16, 17 und 18 radial nach außen und radial nach innen hin sektorförmige, offene Aufnahmen 19, 20 für die Energiespeicher 7a bis 11 a. In Figur 4 wurden lediglich Aufnahmen des Ringes 15 mit den Bezugszeichen 19 und 20 versehen. Es ist jedoch ersichtlich, wie bereits beschrieben, dass alle Führungsringe 15 bis 18 entsprechende Aufnahmen 19, 20 besitzen. Zwischen den in Umfangsrichtung abwechselnd aufeinander folgenden, sektorförmigen Aufnahmen 19 und 20 bilden die Führungsringe 15 bis 18 radial verlaufende Abstützbereiche 21, 22, an denen sich die dem entsprechenden Führungsring zugeordneten Energiespeicher in Umfangsrichtung abstützen können, damit sie bei einer Relativverdrehung zwischen der Primärmasse 2 und der Sekundärmasse 3 komprimiert werden. Dem Führungsring 15 sind die Energiespeicher 7a und 8a zugeordnet. Entsprechend sind die übrigen Energiespeicher den anderen Führungsringen zugeordnet.

Der radial äußere Führungsring 14 besitzt bei dem dargestellten Ausführungsbeispiel ebenfalls sektorförmige Aufnahmen 23, 24, wobei in den Aufnahmen 24 die Energiespeicher 7a aufgenommen sind. Die Aufnahmen 23 können bei bestimmten Anwendungsfällen entfallen, dienen jedoch hier zur Bildung einer im Verdrehwinkel begrenzten Hystereseeinrichtung beziehungsweise Rutschkupplung. Hierfür besitzt die Primärmasse 2 Begrenzungskonturen 25, die mit Verdrehspiel in die Aufnahmen 23 eingreifen. Dadurch wird eine Relativverdrehung zwischen dem Führungsring 14 und der Primärmasse 2 ermöglicht. Die Begrenzungskonturen 25 sind bei dem dargestellten Ausführungsbeispiel durch radial nach innen hin weisende nasenförmige Anformungen, beziehungsweise Anprägungen 25 gebildet.

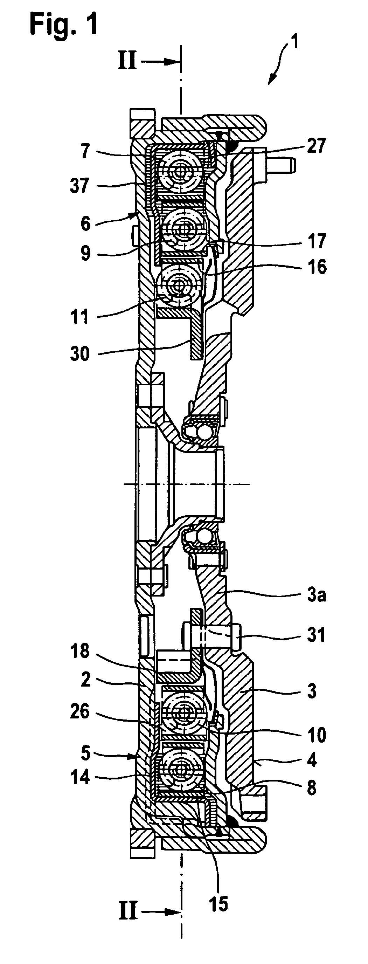

Wie aus Figur 1 ersichtlich ist, bildet die Primärmasse 2 einen ringförmigen Raum 26, in dem die Federgruppen 7 bis 11 aufgenommen sind. Zumindest der radial äußere Bereich des Raumes 26 ist mit einem viskosen Medium 27, wie beispielsweise Fett, gefüllt. Durch diese Fettfüllung wird, wie dies aus Figur 4 verständlich ist, bei einer Relativverdrehung zwischen den beiden Massen 2 und 3 zumindest im Bereich der Aufnahmen 23 eine Dämpfung durch Verdrängung des in diesen enthaltenen viskosen Mediums erzeugt. Diese Verdrängung wird durch die umfangsmäßige Bewegung der Begrenzungskonturen 25 innerhalb der Aufnahmen 23 erzeugt.

Zur umfangsmäßigen Abstützung der Energiespeicher 11a trägt die Sekundärmasse 3 Umfangsanschläge 28, 29, die hier durch ein Blechformteil 30 gebildet sind, das mit dem Gussbauteil 3a (Figur 1), hier über Nietverbindungen 31, starr verbunden ist. Wie aus Figur 2 und 4 ersichtlich ist, bildet das Bauteil 30 ebenfalls radial nach außen hin offene Aufnahmen 32 für die Energiespeicher 11a. Die ringförmigen Bauteile 14 bis 18 sind derart ausgebildet, dass eine Zentrierung zwischen diesen Bauteilen gewährleistet ist, die auch während der Relativverdrehung der einzelnen ringförmigen Bauteile 14 bis 18 erhalten bleibt. Bei den dargestellten Ausführungsbeispielen sind die ringförmigen Bauteile 14 bis 18 unmittelbar über sektorförmige Bereiche, welche Führungsflächen bilden, zentriert. Zur Verbesserung der Relativverdrehung können diese Führungsflächen mit einem der Reibung reduzierenden Werkstoff beschichtet sein.

Zweckmäßig kann es auch sein, wenn zwischen den Führungsflächen der ringförmigen Bauteile 14 bis 18 zumindest stellenweise Gleitschuhe oder Rollschuhe mit Abwälzkörpern vorgesehen werden.

Die Führungsringe 14 bis 18 können in besonders vorteilhafter Weise aus Blechmaterial hergestellt werden.

Zur Begrenzung der Relativverdrehung zwischen den Massen 2 und 3 können die Windungen der Energiespeicher beziehungsweise Schraubenfedern auf Block gehen.

In vorteilhafter Weise sind die Führungsringe 14 bis 18 umfangsmäßig geschlossen, so dass sie die radial innerhalb derselben vorgesehenen Energiespeicher fliehkraftmäßig abstützen können.

Aus Figur 2 ist zu entnehmen, dass die radial inneren Federn 11a ein Verdrehspiel 32, 32a gegenüber den Abstützbereichen 28, 29 aufweisen.

Wie aus Figur 1 und 3 ersichtlich ist, bildet der äußere Führungsring 14 ein topfartiges Bauteil, welches sich über radial verlaufende Bereiche 33 (in Figur 3), an der radialen Wandung 34 des die Kammer 26 begrenzenden Blechformteiles 35 axial reibend abstützt. Das topfförmige Blechformteil 14 wird durch eine axial verspannte Tellerfeder 36, welche im radial äußeren Bereich des Raumes 26 angeordnet ist, gegen die Wandungsbereiche 34 verspannt. Die Größe der Vorspannung der Tellerfeder 36 bestimmt die Größe des Drehmomentes, welches ein Durchrutschen des topfförmigen Bauteiles 14 und der Tellerfeder 36 gegenüber der Primärmasse 2 beziehungsweise dem Bauteil 35 bewirkt.

Mit dem vorgeschlagenen Aufbau können sehr lange Federkennlinien erzeugt werden. Die winkelbegrenzte Rutschkupplung, welche zumindest die Bauteile 14 und 36 umfasst, gewährleistet einen einwandfreien Startvorgang indem eine Resonanzerscheinung unterdrückt werden kann.

In Figur 5 ist wiederum eine mit Fett gefüllte Aufnahme 23 ersichtlich, ausgehend von den Aufnahmen 23 sind Kanäle 37 vorgesehen, welche beispielsweise in die radiale Wandung 34 des Blechformteils 35 eingebracht sind (Figur1). Während einer Volumenveränderung der Aufnahmen 23 wird über die Kanäle 37 Fett radial nach innen gedrängt, wodurch auch eine Schmierung der radial weiter innen liegenden Federn, beziehungsweise Bauteile gewährleistet wird. Es wird also durch den beschriebenen Aufbau eine Art Schmiermittelpumpe gebildet.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche, die durch Kombination oder Abwandlung von einzelnen in Verbindung mit den in der allgemeinen Beschreibung und der Figurenbeschreibung sowie den Ansprüchen beschriebenen und in den Zeichnungen enthaltenen Merkmalen bzw. Elementen oder Verfahrensschritten gebildet werden können.

### Bezugszeichenliste

- 1: Torsionsschwingungsdämpfer
- 2: Primärmasse
- 3: Sekundärmasse
- 3a: Gussbauteil
- 4: Reibfläche
- 5: Drehschwingungsdämpfer
- 6: Federanordnung
- 7: Federgruppen
- 7a: Energiespeicher
- 8: Federgruppen
- 8a: Energiespeicher
- 9: Federgruppen
- 9a: Energiespeicher
- 10: Federgruppen
- 10a: Energiespeicher
- 11: Federgruppen
- 11a: Energiespeicher
- 12: spiralartige Linien
- 13: Winkel
- 14: ringförmige Bauteile (Führungsringe)
- 15: ringförmige Bauteile (Führungsringe)
- 16: ringförmige Bauteile (Führungsringe)
- 17: ringförmige Bauteile (Führungsringe)
- 18: ringförmige Bauteile (Führungsringe)
- 19: Bezugszeichen für Aufnahmen des Ringes 15
- 20: Bezugszeichen für Aufnahmen des Ringes 15
- 21: Abstützbereiche
- 22: Abstützbereiche
- 23: sektorförmige Aufnahmen
- 24: sektorförmige Aufnahmen
- 25: Begrenzungskonturen
- 26: ringförmiger Raum
- 27: viskoses Medium
- 28: Umfangsanschläge
- 29: Umfangsanschläge
- 30: Blechformteil
- 31: Nietverbindungen
- 32: offene Aufnahmen
- 33: radial verlaufende Bereiche
- 34: radiale Wandung
- 35: begrenzendes Blechformteil
- 36: axial verspannte Tellerfeder
- 37: Kanäle

## Patentansprüche

1. Torsionsschwingungsdämpfer (1) mit einem Eingangsteil (2) und einem Ausgangsteil (3), zwischen denen mindestens zwei in Reihe geschaltete Federgruppen (7, 8, 9, 10) angeordnet sind, **dadurch gekennzeichnet, dass** die Federn (7a, 8a, 9a, 10a) der beiden Federgruppen, in Umfangsrichtung betrachtet, alternierend und zumindest teilweise radial überdeckend angeordnet sind, wodurch jeweils eine Feder der auf einem größeren Durchmesser angeordneten ersten Federgruppe (7a) mit einer Feder der auf einem kleineren Durchmesser angeordneten zweiten Federgruppe (8a) zwischen Eingangs- und Ausgangsteil (2, 3) in Reihe geschaltet sind.

2. Torsionsschwingungsdämpfer nach Anspruch 1, **dadurch gekennzeichnet, dass** mindestens drei Federgruppen (7, 8, 9, 10) vorhanden sind, die Dreierfedersätze bilden, deren Federn in Reihe geschaltet sind.

3. Torsionsschwingungsdämpfer nach Anspruch 1 oder 2, **dadurch gekennzeichnet, dass** die in Umfangsrichtung in Reihe geschalteten Federn (7a, 8a, 9a, 10a) der Federgruppen zumindest annähernd um den halben Windungsdurchmesser der Federn zueinander radial versetzt angeordnet sind.

4. Torsionsschwingungsdämpfer nach einem der Ansprüche 1 bis 3, **dadurch gekennzeichnet, dass** zwischen zwei in Reihe geschalteten Federgruppen ein ringförmiges Bauteil (15, 16, 17, 18) vorgesehen ist, welches abwechselnd radial nach außen und radial nach innen hin offene Aufnahmen (23, 24) bildet für die in Reihe geschalteten Federn, wobei jeweils zwischen einer radial nach außen und einer radial nach innen hin offenen Aufnahme radial verlaufende Abstützbereiche (21, 22) zur umfangsmäßigen Abstützung der in Reihe geschalteten Federn vorhanden sind.

5. Torsionsschwingungsdämpfer nach Anspruch 4, **dadurch gekennzeichnet, dass** das ringförmige Bauteil (15, 16, 17, 18) auch zur Führung und fliehkraftmäßigen Abstützung zumindest der in den radial nach innen hin offenen Aufnahmen enthaltenen Federn dient.

6. Torsionsschwingungsdämpfer nach Anspruch 4 oder 5, **dadurch gekennzeichnet, dass** bei Vorhandensein von mindestens zwei ringförmigen Bauteilen (15, 16, 17, 18) diese zueinander verdrehbar zentriert sind.

7. Torsionsschwingungsdämpfer nach einem der Ansprüche 4 bis 6, **dadurch gekennzeichnet, dass** die ringartigen Bauteile (15, 16, 17, 18) unmittelbar zueinander zentriert sind.

8. Torsionsschwingungsdämpfer nach einem der Ansprüche 1 bis 7, **dadurch gekennzeichnet, dass** die in Reihe geschalteten Federn der Federgruppen in Umfangsrichtung und radialer Richtung derart zueinander versetzt angeordnet sind, dass die jeweils in Reihe geschalteten und einen Federsatz bildenden Federn eine spiralartige Anordnung bilden (Fig. 4).

9. Torsionsschwingungsdämpfer nach einem der Ansprüche 1 bis 8, **dadurch gekennzeichnet, dass** jede Federgruppe mindestens zwei Federn umfasst.

10. Torsionsschwingungsdämpfer nach einem der Ansprüche 1 bis 9, **dadurch gekennzeichnet, dass** die Anzahl der Federgruppen der Anzahl der jeweils in Reihe geschalteten Federn entspricht.

## Claims

1. Torsional vibration damper (1) having an input part (2) and an output part (3), between which at least two spring groups (7, 8, 9, 10) connected in series are arranged, **characterized in that** the springs (7a, 8a, 9a, 10a) of the two spring groups, as viewed in the circumferential direction, are arranged alternately and at least partly in a radially overlapping manner, as a result of which a respective spring of the first spring group (7a) arranged on a larger diameter is connected in series with a spring of the second spring group (8a), arranged on a smaller diameter, between input and output parts (2, 3).

2. Torsional vibration damper according to Claim 1, **characterized in that** there are at least three spring groups (7, 8, 9, 10) which form triple spring sets, the springs of which are connected in series.

3. Torsional vibration damper according to Claim 1 or 2, **characterized in that** the springs (7a, 8a, 9a, 10a), connected in series in the circumferential direction, of the spring groups are arranged radially offset from one another at least approximately by half the coil diameter of the springs.

4. Torsional vibration damper according to one of Claims 1 to 3, **characterized in that** an annular component (15, 16, 17, 18) is provided between two spring groups connected in series and forms receptacles (23, 24), alternately open radially outwards and radially inwards, for the springs connected in series, wherein there are supporting regions (21, 22), running radially between a receptacle open radially outwards and a receptacle open radially inwards, for the circumferential support of the springs connected in series.

5. Torsional vibration damper according to Claim 4, **characterized in that** the annular component (15, 16, 17, 18) also serves for guiding and for supporting, in terms of centrifugal force, at least the springs contained in the receptacles open radially inwards.

6. Torsional vibration damper according to Claim 4 or 5, **characterized in that**, if there are at least two annular components (15, 16, 17, 18), they are centred relative to one another in a rotatable manner.

7. Torsional vibration damper according to one of Claims 4 to 6, **characterized in that** the annular components (15, 16, 17, 18) are centred directly relative to one another.

8. Torsional vibration damper according to one of Claims 1 to 7, **characterized in that** the springs, connected in series, of the spring groups are arranged offset from one another in the circumferential direction and in the radial direction in such a way that the springs in each case connected in series and forming a spring set form a spiral-like arrangement (Fig. 4).

9. Torsional vibration damper according to one of Claims 1 to 8, **characterized in that** each spring group comprises at least two springs.

10. Torsional vibration damper according to one of Claims 1 to 9, **characterized in that** the number of spring groups corresponds to the number of springs connected in each case in series.

## Revendications

1. Amortisseur de vibrations torsionnelles (1) comprenant une partie d'entrée (2) et une partie de sortie (3), entre lesquelles sont disposés au moins deux groupes de ressorts (7, 8, 9, 10) montés en série, **caractérisé en ce que** les ressorts (7a, 8a, 9a, 10a) des deux groupes de ressorts, considérés dans la direction périphérique, sont disposés en alternance et au moins en partie avec un chevauchement radial, de sorte qu'à chaque fois un ressort du premier groupe de ressorts (7a) disposé sur un plus grand diamètre soit disposé en série entre la partie d'entrée et de sortie (2, 3) avec un ressort du deuxième groupe de ressorts (8a) disposé sur un plus petit diamètre.

2. Amortisseur de vibrations torsionnelles selon la revendication 1, **caractérisé en ce qu'**au moins trois groupes de ressorts (7, 8, 9, 10) sont prévus, lesquels forment des jeux de trois ressorts dont les ressorts sont montés en série.

3. Amortisseur de vibrations torsionnelles selon la revendication 1 ou 2, **caractérisé en ce que** les ressorts (7a, 8a, 9a, 10a) des groupes de ressorts montés en série dans la direction périphérique sont disposés au moins approximativement de manière décalée radialement les uns par rapport aux autres autour des rayons d'enroulement des ressorts.

4. Amortisseur de vibrations torsionnelles selon l'une quelconque des revendications 1 à 3, **caractérisé en ce qu'**on prévoit entre deux groupes de ressorts montés en série un composant de forme annulaire (15, 16, 17, 18) qui forme des logements (23, 24) ouverts en alternance radialement vers l'extérieur et radialement vers l'intérieur pour les ressorts montés en série, à chaque fois des régions de support (21, 22) s'étendant radialement entre un logement ouvert radialement vers l'extérieur et un logement ouvert radialement vers l'intérieur étant prévues pour le support périphérique des ressorts montés en série.

5. Amortisseur de vibrations torsionnelles selon la revendication 4, **caractérisé en ce que** le composant de forme annulaire (15, 16, 17, 18) sert également à guider et supporter par la force centrifuge, au moins les ressorts contenus dans les logements ouverts radialement vers l'intérieur.

6. Amortisseur de vibrations torsionnelles selon la revendication 4 ou 5, **caractérisé en ce qu'**en présence d'au moins deux composants de forme annulaire (15, 16, 17, 18), ceux-ci sont centrés par rotation l'un par rapport à l'autre.

7. Amortisseur de vibrations torsionnelles selon l'une quelconque des revendications 4 à 6, **caractérisé en ce que** les composants de forme annulaire (15, 16, 17, 18) sont centrés directement les uns par rapport aux autres.

8. Amortisseur de vibrations torsionnelles selon l'une quelconque des revendications 1 à 7, **caractérisé en ce que** les ressorts des groupes de ressorts montés en série sont disposés de manière décalée les uns par rapport aux autres dans la direction périphérique et dans la direction radiale de telle sorte que les ressorts montés en série et formant un jeu de ressorts forment un agencement en spirale (figure 4).

9. Amortisseur de vibrations torsionnelles selon l'une quelconque des revendications 1 à 8, **caractérisé en ce que** chaque groupe de ressorts comprend au moins deux ressorts.

10. Amortisseur de vibrations torsionnelles selon l'une quelconque des revendications 1 à 9, **caractérisé en ce que** le nombre des groupes de ressorts correspond au nombre des ressorts respectifs montés en série.
